Europäisches Patentamt

European Patent Office

Office européen des brevets

(19)

(11) Publication number: **0 172 410**
A1

(12)

# EUROPEAN PATENT APPLICATION

(21) Application number: **85108914.4**

(22) Date of filing: **16.07.85**

(51) Int. Cl.⁴: **C 08 L 21/00**
**C 08 K 5/09**

(30) Priority: **24.08.84 US 644084**

(43) Date of publication of application:
**26.02.86 Bulletin 86/9**

(84) Designated Contracting States:
**DE FR GB IT LU**

(71) Applicant: **THE FIRESTONE TIRE & RUBBER COMPANY**
**1200 Firestone Parkway**
**Akron, Ohio 44317(US)**

(72) Inventor: **Davis, James A.**
**10688 Mogadore Road**
**Uniontown Ohio 44685(US)**

(74) Representative: **Kraus, Walter, Dr. et al,**
**Patentanwälte Kraus, Weisert & Partner**
**Thomas-Wimmer-Ring 15**
**D-8000 München 22(DE)**

(54) **Method for increasing the modulus of vulcanizable rubber.**

(57) This invention is directed toward a method of increasing modulus properties of vulcanizable rubber compositions comprising the step of dispersing from about 0.2 to about 15 parts per 100 parts of rubber in the rubber composition of an organic salt of a transition metal and an organic acid selected from the group consisting of aliphatic and aromatic monocarboxylic acids having from one to about 20 carbon atoms and aliphatic and aromatic dicarboxylic acids having from two to about 22 carbon atoms.

EP 0 172 410 A1

# METHOD FOR INCREASING THE MODULUS 0172410
# OF VULCANIZABLE RUBBER COMPOSITIONS

## TECHNICAL FIELD

The present invention provides a method for increasing the modulus properties of a vulcanizable rubber composition used in the manufacture of tires, conveyor belts, hoses and the like.

Improvement in modulus properties is necessary for the successful use of the foregoing rubber articles inasmuch as an article with high modulus properties will respond better to a sudden stretching or sudden impact and will undergo less permanent deformations. A good example of this is the ability of a tire to return to its original shape after striking a hard object like a curb or large stone.

Technically, modulus properties are a measure of the force needed to deform an article and are typically reported as the tensile stress required to elongate a rubber article to a given length or to eventually break it. Modulus is often reported as the stress necessary to elongate the article a particular percentage, and thus stress reported at 300 percent modulus is the tensile stress required to stretch the article for four times its original length.

I have determined that incorporating into a vulcanizable rubber composition small amounts of an organic salt of a transition metal, such as Mg, Co, Ni, Ca or Zn, wherein the organic acid is selected from the group consisting of aliphatic and aromatic monocarboxylic acids having from one to about 20 carbon atoms and aliphatic and aromatic dicarboxylic acids having from two to about 22 carbon atoms, will increase the modulus and hardness of the vulcanizable rubber composition.

The present invention may have utility in applications where a high modulus rubber composition is needed, i.e., bead fillers and rubber skim compositions calendered to steel or body ply fabric used in the manufacture of tires, conveyor belts and hoses as well as any rubber coated fabric reinforced articles.

## BACKGROUND ART

With respect to improved modulus properties it is known in the art to employ various rubber chemical additives in a vulcanizable rubber composition to increase modulus. One such rubber chemical additive is taught by U.S. Pat. No. 3,639,308 which discloses that the addition of a condensation product of a phenol and a methylene donor along with silica to a natural/synthetic rubber blend will improve modulus properties.

Another patent directed toward modulus improvement, U.S. Pat. No. 4,267,079, owned by the Assignee of record herein discloses that the addition of Neoprene to a rubber composition, besides exhibiting better humidity aged metal adhesion and metal adhesion retention, will also improve or increase modulus.

With respect to the use of organic salts of transition metals in vulcanizable rubber compositions, it is known in the art to employ various salts such as cobalt acetate to improve adhesion and adhesion retention properties. Inasmuch as the present invention is not concerned with adhesion and adhesion retention properties, patents directed thereto are not relevant to the subject application apart from the fact that certain organic salts of transition metals have been added to rubber compositions heretofore.

While others have broadly disclosed the use of various organic salts of transition metals for adhesion and adhesion retention increase, the use of the foregoing organic salts to increase modulus has not been described in any patents or publications of which I am aware.

## DISCLOSURE OF THE INVENTION

In general, the subject invention is directed toward a method for increasing the modulus of vulcanizable rubber compositions comprising the step of dispersing about 0.2 to about 15 parts per 100 parts of rubber in the rubber composition of an organic salt of a transition metal and an organic acid selected from the group consisting of aliphatic and aromatic monocarboxylic acids having from one to about 20 carbon atoms and aliphatic and aromatic dicarboxylic acids having from two to about 22 carbon atoms.

## PREFERRED MODE FOR CARRYING OUT THE INVENTION

To illustrate the present invention, a typical vulcanizable rubber composition is presented hereinbelow which is suitable for preparation of rubber articles such as tires. Modulus properties of the stock have been measured and are also presented hereinbelow. It is to be understood that the composition of the vulcanizable rubber composition provided is not part of the present invention and that it has been presented solely to enable those skilled in the art to have at least one vulcanizable rubber composition with which to practice the invention.

The polymer portion of the rubber composition can comprise 100 parts by weight of natural rubber. Polymer type, here, is not deemed to be a limitation to the practice of the instant invention. Natural rubber may also be employed in a blended state with one or more synthetic rubbers such as styrene-butadiene, polybutadiene, synthetic isoprene or other synthetic rubbers. Desirably, the natural rubber content of the polymer composition will be at least 40 to 50 percent. Further, pure forms of synthetic rubbers such as those disclosed may be used either alone or blended with other synthetic rubbers.

The ingredients utilized in the practice of the present invention include organic salts of transition metals. Suitable organic salts of monocarboxylic acids having from one to about 20 carbon atoms would be preferably, formic, acetic, propionic, butyric, valeric, octanoic, undecanoic, lauric, palmitic, stearic, non-adecanoic, benzoic and the like. Suitable dicarboxylic acids having from two to about 22 carbon atoms include acids such as oxalic, malonic, maleic, succinic, glutaric, adipic, pimelic, suberic, azelaic, sebacic, phthalic, isophthalic, terephthalic, homophthalic, o,m and p-phenylenediacetic and o-phenyleneacetic-beta-propionic acid. Preferable transition metals are selected from the group consisting of cobalt, calcium, magnesium, nickel and zinc. Particularly useful as the organic salt of a transition metal are complexes prepared from propionic acid and an inorganic transition metal salt such as a hydroxide, chloride, nitrate and the like of the chosen transition metal. These compounds are usually added to the rubber composition in amounts from about 0.2 to about 15.0 parts with about 0.5 to 3.0 parts being preferred.

In order to determine the improvements in modulus properties when the transition metal propionate complex is added to the vulcanizable rubber composition, modulus (tensile stress), tensile strength at break and ultimate elongation measurements were conducted on unaged and heat aged ring specimens in accordance with ASTM D412-80, Method B - Cut Ring Specimens which follows:

Tests A and B reported in Tables I to V utilized specimens prepared by cutting flat slabs of rubber which have been cured for 23 minutes at 149° C. Rings which were not less than 1.0 mm nor more than 3 mm in thickness were cut from the vulcanized rubber slabs. Each ring was required to have measured dimensions of about 16.18 ± 0.05 mm for the inside diameter and 18.22 ± 0.07 mm for the outside diameter. The actual thickness of the cut ring itself was 1.02 ± 0.01 mm. Both unaged and heat aged ring specimens were tested. Before testing, the unaged ring specimens were conditioned at least 3 hours when the test temperature is 23 ± 2° C. The aged ring specimens were heat aged for two days at 82° C and conditioned overnight at 23 ± 2° C before testing. Unless otherwise specified, the standard temperature for testing were 23 ± 2° C.

At the onset of each test, the ring specimen itself was placed onto the two spindles of a table model Instron tester, Model No. 1130. The spindles slowly separated at a rate of 50.8 cm per minutes under a load of 45.4 Kg. The initial setting between the spindles from center to center was adjusted so that a minimum of tension was placed on the ring specimen prior to testing.

Once the test began the spindles that held the ring specimen in position continued to separate until the ring broke. The spindles were then separated with the force and distance expressed as percentage of length of the original ring being measured. The force and distance at break was also measured.

The modulus (tensile stress), tensile strength and ultimate elongation were calculated as follows. The tensile stresses at particular percentages of elongation were found by using the equation:

$$\text{Tensile stress} = F/2A$$

where:

F = measured force at percentage elongation, and

2A = twice the cross-sectional area.

Also, tensile strength can be calculated by letting F in the above equation for tensile stress be equal to the force required to break the ring specimen. Finally, ultimate elongation was calculated according to the equation:

$$E = 100(2D + G-C)/C$$

where:

E = ultimate elongation, %

C = inside diameter of ring specimen

D = distance between centers of the spindles, and

G = circumference of one spindle.

A third test, Test C, was conducted on a cured rebound block. Test C, a Shore "A" hardness test was performed in accordance with ASTM D2240-81. This test (using a Type A durometer) permits hardness measurements on the flat surface of a vulcanized rubber composition by utilizing a solid specimen which is at least 6 mm in thickness, and has been optimally cured. The lateral dimensions of the specimen are to be sufficient to permit measurements at least 12 mm from any edge unless it is known that identical results are obtained when measurements are made at a lesser distance from an edge. A suitable hardness determination cannot be made on a rounded, uneven or rough surface. The surface of the rubber specimen must be and was flat and the tests were performed at 23 $\pm$ 2° C.

The hardness is determined by utilizing a Type A durometer which measures hardness basically by indenting the flat surface of the rubber specimen and measuring the force applied to the indentor. The indentor itself should always be in a vertical position during the actual test. If a time interval is not specified, the scale is read (0-100 points) within one second after the indentor is in firm contact with the flat surface of the rubber specimen. A Type A durometer machine, such as, Model No. 41-50 manufactured by Shore Instrument & Mfg. Co., Inc., New York, New York, can be utilized to measure the hardness of a vulcanized rubber composition.

| Compounting Ingredients | Stock A |
|---|---|
| Natural rubber | 100 |
| LS-HAF black (ASTM N-326) | 60 |
| Naphthenic process oil[1] | 5 |
| Zinc oxide | 8 |
| Stearic acid | 0.50 |
| Santoflex 13[2] | 1.50 |
| Sulfur | 6 |
| Vulkacit DZ[3] | 1 |
| Santogard PVI[4] | 0.20 |
| Metal propionate | Variable |

1) Circosol 410 - a known oil of medium solvency containing a 35% minimum of naphthene ring carbons, light yellow to amber oil, having a flash point of 166° C minimum, and a specific gravity of about 0.88 to 0.93 at 25° C

2) N-1,3-dimethylbutyl-N'-phenyl-p-phenylenediamine

3) N,N-dicyclohexyl-2-benzothiazyl-sulfenamide

4) N-(cyclohexylthio)phthalimide

0172410

Tables I to V contain data which demonstrated the increase in modulus and hardness when different transition metal propionates were added in varying amounts to Stock A. The transition metal propionate-free blank control with the optimum sulfur level of 6 phr has been employed as the experimental control and is designated as Example 1 throughout the tables.

TABLE I
### Effects of Different Levels of Cobalt Propionate

|  | Ex. 1 | Ex. 2 | Ex. 3 | Ex. 4 | Ex. 5 |
|---|---|---|---|---|---|
| Cobalt propionate, phr | - | 0.32 | 0.64 | 0.96 | 1.28 |
| Sulfur, phr | 6 | 6 | 6 | 6 | 6 |

Test A

Normal Stress-Strain Properties at 23° C - Slabs
  Cured 23 Minutes at 149° C

| | Ex. 1 | Ex. 2 | Ex. 3 | Ex. 4 | Ex. 5 |
|---|---|---|---|---|---|
| 100% Modulus, $Kg/cm^2$ | 29.88 | 36.91 | 47.46 | 56.24 | 60.47 |
| 200% Modulus, $Kg/cm^2$ | 79.10 | 91.40 | 108.98 | 121.28 | 126.56 |
| 300% Modulus, $Kg/cm^2$ | 145.89 | 163.47 | 184.56 | 201.44 | 207.41 |
| Tensile Strength, $Kg/cm^2$ | 226.75 | 228.50 | 232.02 | 224.99 | 214.44 |
| Ultimate Elongation, % | 385 | 390 | 365 | 335 | 315 |

Test B

Heat Aged Stress-Strain Properties at 23° C - Slabs
  Cured 23 Minutes at 149° C and Heat Aged 2 Days
  at 82° C

| | Ex. 1 | Ex. 2 | Ex. 3 | Ex. 4 | Ex. 5 |
|---|---|---|---|---|---|
| 100% Modulus, $Kg/cm^2$ | 46.76 | 62.22 | 74.53 | 77.34 | 80.86 |
| 200% Modulus, $Kg/cm^2$ | 116.01 | 140.62 | 159.60 | 161.00 | 163.47 |
| Tensile Strength, $Kg/cm^2$ | 196.87 | 219.72 | 222.88 | 200.38 | 189.84 |
| Ultimate Elongation, % | 333 | 292 | 275 | 250 | 230 |

Test C

Shore "A" Hardness - Rebound Blocks - Cured
  35 Minutes at 149° C - Tested at 23° C

| | Ex. 1 | Ex. 2 | Ex. 3 | Ex. 4 | Ex. 5 |
|---|---|---|---|---|---|
| | 63 | 68 | 73 | 74 | 76 |

0172410

TABLE II

Effects of Different Levels of Calcium Propionate

|  | Ex. 1 | Ex. 6 | Ex. 7 | Ex. 8 | Ex. 9 |
|---|---|---|---|---|---|
| Calcium propionate, phr | - | 0.39 | 0.78 | 1.165 | 1.55 |
| Sulfur, phr | 6 | 6 | 6 | 6 | 6 |

Test A

Normal Stress-Strain Properties at 23° C - Slabs
   Cured 23 Minutes at 149° C

| | Ex. 1 | Ex. 6 | Ex. 7 | Ex. 8 | Ex. 9 |
|---|---|---|---|---|---|
| 100% Modulus, $Kg/cm^2$ | 29.88 | 37.62 | 38.68 | 35.16 | 35.16 |
| 200% Modulus, $Kg/cm^2$ | 79.10 | 93.16 | 93.16 | 86.13 | 86.13 |
| 300% Modulus, $Kg/cm^2$ | 145.89 | 165.23 | 165.23 | 152.92 | 154.68 |
| Tensile Strength, $Kg/cm^2$ | 226.75 | 235.54 | 233.78 | 222.18 | 217.96 |
| Ultimate Elongation, % | 385 | 395 | 395 | 400 | 390 |

Test B

Heat Aged Stress-Strain Properties at 23° C - Slabs
   Cured 23 Minutes at 149° C and Heat Aged 2 Days
   at 82° C

| | Ex. 1 | Ex. 6 | Ex. 7 | Ex. 8 | Ex. 9 |
|---|---|---|---|---|---|
| 100% Modulus, $Kg/cm^2$ | 46.76 | 63.28 | 63.28 | 56.25 | 56.25 |
| 200% Modulus, $Kg/cm^2$ | 116.01 | 144.12 | 142.38 | 131.13 | 130.07 |
| Tensile Strength, $Kg/cm^2$ | 196.87 | 228.51 | 216.20 | 210.93 | 207.41 |
| Ultimate Elongation, % | 333 | 286 | 291 | 310 | 305 |

Test C

Shore "A" Hardness - Rebound Block - Cured
   35 Minutes at 149° C - Tested at 23° C

| | Ex. 1 | Ex. 6 | Ex. 7 | Ex. 8 | Ex. 9 |
|---|---|---|---|---|---|
| | 63 | 71 | 71 | 71 | 69 |

## TABLE III
### Effects of Different Levels of Magnesium Propionate

|  | Ex. 1 | Ex. 10 | Ex. 11 | Ex. 12 | Ex. 13 |
|---|---|---|---|---|---|
| Magnesium propionate, phr | - | 0.66 | 1.32 | 1.98 | 2.64 |
| Sulfur, phr | 6 | 6 | 6 | 6 | 6 |

**Test A**

Normal Stress-Strain Properties at 23° C - Slabs
  Cured 23 Minutes at 149° C

|  | Ex. 1 | Ex. 10 | Ex. 11 | Ex. 12 | Ex. 13 |
|---|---|---|---|---|---|
| 100% Modulus, $Kg/cm^2$ | 29.88 | 38.67 | 38.67 | 42.19 | 42.19 |
| 200% Modulus, $Kg/cm^2$ | 79.10 | 94.92 | 94.92 | 100.19 | 98.93 |
| 300% Modulus, $Kg/cm^2$ | 145.89 | 166.28 | 165.23 | 172.26 | 170.50 |
| Tensile Strength, $Kg/cm^2$ | 226.75 | 226.75 | 210.93 | 216.20 | 202.14 |
| Ultimate Elongation, % | 385 | 385 | 372 | 356 | 345 |

**Test B**

Heat Aged Stress-Strain Properties at 23° C - Slabs
  Cured 23 Minutes at 149° C and Heat Aged 2 Days
  at 82° C

|  | Ex. 1 | Ex. 10 | Ex. 11 | Ex. 12 | Ex. 13 |
|---|---|---|---|---|---|
| 100% Modulus, $Kg/cm^2$ | 46.76 | 61.87 | 63.28 | 65.04 | 66.09 |
| 200% Modulus, $Kg/cm^2$ | 116.01 | 147.65 | 145.89 | 149.41 | 149.41 |
| Tensile Strength, $Kg/cm^2$ | 196.87 | 247.84 | 226.74 | 238.00 | 230.26 |
| Ultimate Elongation, % | 333 | 316 | 295 | 305 | 300 |

**Test C**

Shore "A" Hardness - Rebound Block - Cured
  35 Minutes at 149° C - Tested at 23° C

|  | Ex. 1 | Ex. 10 | Ex. 11 | Ex. 12 | Ex. 13 |
|---|---|---|---|---|---|
|  | 63 | 69 | 70 | 72 | 71 |

TABLE IV

Effects of Different Levels of Nickel Propionate

| | Ex. 1 | Ex. 14 | Ex. 15 | Ex. 16 | Ex. 17 |
|---|---|---|---|---|---|
| Nickel propionate, phr | - | 0.39 | 0.775 | 1.165 | 1.55 |
| Sulfur, phr | 6 | 6 | 6 | 6 | 6 |

Test A

Normal Stress-Strain Properties at 23° C - Slabs
 Cured 23 Minutes at 149° C

| | Ex. 1 | Ex. 14 | Ex. 15 | Ex. 16 | Ex. 17 |
|---|---|---|---|---|---|
| 100% Modulus, $Kg/cm^2$ | 29.88 | 32.34 | 33.04 | 34.10 | 36.21 |
| 200% Modulus, $Kg/cm^2$ | 79.10 | 81.91 | 86.13 | 88.59 | 93.16 |
| 300% Modulus, $Kg/cm^2$ | 145.89 | 147.65 | 154.68 | 158.20 | 165.23 |
| Tensile Strength, $Kg/cm^2$ | 226.75 | 198.62 | 203.90 | 207.41 | 207.41 |
| Ultimate Elongation, % | 385 | 383 | 375 | 375 | 365 |

Test B

Heat Aged Stress-Strain Properties at 23° C - Slabs
 Cured 23 Minutes at 149° C and Heat Aged 2 Days
 at 82° C

| | Ex. 1 | Ex. 14 | Ex. 15 | Ex. 16 | Ex. 17 |
|---|---|---|---|---|---|
| 100% Modulus, $Kg/cm^2$ | 46.76 | 49.21 | 50.97 | 51.68 | 56.25 |
| 200% Modulus, $Kg/cm^2$ | 116.01 | 119.53 | 120.23 | 123.04 | 130.07 |
| Tensile Strength, $Kg/cm^2$ | 196.87 | 215.15 | 207.41 | 207.41 | 203.90 |
| Ultimate Elongation, % | 333 | 331 | 320 | 315 | 300 |

Test C

Shore "A" Hardness - Rebound Block - Cured
 35 Minutes at 149° C - Tested at 23° C

| | Ex. 1 | Ex. 14 | Ex. 15 | Ex. 16 | Ex. 17 |
|---|---|---|---|---|---|
| | 63 | 65 | 66 | 67 | 68 |

## TABLE V

### Effects of Different Levels of Zinc Propionate

|  | Ex. 1 | Ex. 18 | Ex. 19 | Ex. 20 | Ex. 21 |
|---|---|---|---|---|---|
| Zinc propionate, phr | - | 0.59 | 1.175 | 1.77 | 2.35 |
| Sulfur, phr | 6 | 6 | 6 | 6 | 6 |

Test A

Normal Stress-Strain Properties at 23° C - Slabs
   Cured 23 Minutes at 149° C

| | Ex. 1 | Ex. 18 | Ex. 19 | Ex. 20 | Ex. 21 |
|---|---|---|---|---|---|
| 100% Modulus, $Kg/cm^2$ | 29.88 | 42.19 | 47.46 | 56.25 | 52.73 |
| 200% Modulus, $Kg/cm^2$ | 79.10 | 108.98 | 121.28 | 137.10 | 132.53 |
| 300% Modulus, $Kg/cm^2$ | 145.89 | 186.32 | 198.62 | - | - |
| Tensile Strength, $Kg/cm^2$ | 226.75 | 212.69 | 207.41 | 193.35 | 175.78 |
| Ultimate Elongation, % | 385 | 340 | 315 | 270 | 255 |

Test B

Heat Aged Stress-Strain Properties at 23° C - Slabs
   Cured 23 Minutes at 149° C and Heat Aged 2 Days
   at 82° C

| | Ex. 1 | Ex. 18 | Ex. 19 | Ex. 20 | Ex. 21 |
|---|---|---|---|---|---|
| 100% Modulus, $Kg/cm^2$ | 46.76 | 67.85 | 75.58 | 82.61 | 82.61 |
| 200% Modulus, $Kg/cm^2$ | 116.01 | 158.90 | - | - | - |
| Tensile Strength, $Kg/cm^2$ | 196.87 | 189.84 | 163.47 | 123.04 | 142.38 |
| Ultimate Elongation, % | 333 | 235 | 190 | 165 | 140 |

Test C

Shore "A" Hardness - Rebound Block - Cured
   35 Minutes at 149° C - Tested at 23° C

| | Ex. 1 | Ex. 18 | Ex. 19 | Ex. 20 | Ex. 21 |
|---|---|---|---|---|---|
| | 63 | 73 | 74 | 76 | 77 |

0172410

The data in Tables I-V demonstrates the operability of different transition metal propionates inasmuch as there is an increase in the modulus properties for each of the five transition metal propionates tested at four different levels in Stock A. Even at the lowest levels tested, the transition metal propionates, as a group, support this finding. Zinc propionate showed the most response in Stock A, with respect to increase in cured compound modulus and durometer, than any of the other transition metal propionates tested. All vulcanizable rubber compositions supported equivalent sulfur levels.

Based on the foregoing results reported in Tables I-V, it is apparent that the presence of small amounts of any of the transition metal propionates tested are fully capable of increasing cured modulus and durometer of vulcanizable rubber compositions. These transition metal propionates are available as fine powders or they can also be preblended with a known process oil to minimize dusting problems and facilitate handling. Moreover, the results establish that salts of other organic acids than propionic, e.g., monocarboxylics and dicarboxylics set forth herein, can be expected to increase modulus properties in the same manner as has been observed to occur with the propionates inasmuch as all would share in common the presence of at least one carboxyl group.

In conclusion, it is to be understood that all methods and rubber compounds disclosed herein fall within the scope of the claimed invention and that the subject invention is not to be limited by the examples set forth herein. As will be apparent to those skilled in the art the formulation of the rubber composition can be varied within the scope of the total specification disclosure, and it is believed that the preparation and use of such rubber skim stocks can be determined without departing from the spirit of the invention herein disclosed and described, the scope of the invention being limited solely by the scope of the attached claims.

-14-

## CLAIMS

0172410

1. A method of increasing modulus properties of vulcanizable rubber compositions comprising the step of:
   dispersing from about 0.2 to about 15 parts per 100 parts of rubber in said rubber composition of an organic salt of a transition metal and an organic acid selected from the group consisting of aliphatic and aromatic monocarboxylic acids having from one to about 20 carbon atoms and aliphatic and aromatic dicarboxylic acids having from two to about 22 carbon atoms.

2. A method as set forth in claim 1, wherein said transition metal is selected from the group consisting of cobalt, calcium, magnesium, nickel and zinc.

3. A method as set forth in claim 2, wherein said organic salt of said transition metal is cobalt propionate.

4. A method as set forth in claim 2, wherein said organic salt of said transition metal is calcium propionate.

5. A method as set forth in claim 2, wherein said organic salt of said transition metal is magnesium propionate.

6. A method as set forth in claim 2, wherein said organic salt of said transition metal is nickel propionate.

7. A method as set forth in claim 2, wherein said organic salt of said transition metal is zinc propionate.

8. A method as set forth in claim 1, wherein said rubber is selected from the group consisting of natural rubber, synthetic rubbers and blends thereof.

0172410

9. A method as set forth in claim 1, wherein said transition metal organic salt is present in an amount ranging from about 0.3 to about 3.0 parts per 100 parts of rubber.

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| X | FR-A-2 287 349 (GOODRICH)<br><br>* Claim 1; page 2, line 38 - page 3, line 8 *<br><br>--- | 1,2,8,9 | C 08 L 21/00<br>C 08 K 5/09 |
| X | GB-A- 809 743 (DUNLOP)<br><br>* Claim 1; page 1, lines 41-50 *<br><br>--- | 1,2,4,5,8,9 | |
| X | EP-A-0 039 769 (FIRESTONE)<br><br>* Claim 1 *<br><br>--- | 1,3,8,9 | |
| X | EP-A-0 059 883 (FIRESTONE)<br><br>* Claim 1 *<br><br>----- | 1,2,8,9 | **TECHNICAL FIELDS SEARCHED (Int. Cl.4)**<br><br>C 08 K<br>C 08 L |

The present search report has been drawn up for all claims

| Place of search | Date of completion of the search | Examiner |
|---|---|---|
| THE HAGUE | 03-09-1985 | VAN HUMBEECK F.W.C. |